Europäisches Patentamt

European Patent Office

Office européen des brevets

(19)

(11) Numéro de publication: **0 032 465**
A1

## (12) DEMANDE DE BREVET EUROPEEN

(21) Numéro de dépôt: **81400003.0**

(22) Date de dépôt: **06.01.81**

(51) Int. Cl.³: **B 65 G 7/04**
    B 65 G 35/08

(30) Priorité: **14.01.80 FR 8000688**

(43) Date de publication de la demande:
    **22.07.81 Bulletin 81/29**

(84) Etats contractants désignés:
    **AT BE CH DE GB IT LI NL SE**

(71) Demandeur: **Dussud, Jean-Benoît**
    **12, rue Champ Rochas**
    **F-38240 Meylan(FR)**

(72) Inventeur: **Dussud, Jean-Benoît**
    **12, rue Champ Rochas**
    **F-38240 Meylan(FR)**

(74) Mandataire: **Flechner, Willy**
    **c/o CABINET FLECHNER 63, Avenue des Champs**
    **Elysées**
    **F-75008 Paris(FR)**

(54) **Installation de manutention de charge par table à billes.**

(57) On ramène les billes (3) sur le plateau (1) horizontal de la table par un élévateur à porte-billes (19) dont la face supérieure est une garniture (34) de polyuréthanne qui, en butant sous le bord (2), s'incline et fait se déverser les billes sur le plateau (1), pour la manutention de charges lourdes (C).

FIG.1

EP 0 032 465 A1

<u>Installation de manutention de charge par table à billes.</u>

La présente invention est relative à une installation de manutention de charge par table à billes.

A la demande de brevet français 78 34102 qui n'est pas encore publiée, on décrit une installation de manutention de charges, comprenant une table sur le plateau horizontal de laquelle roulent librement des billes de même diamètre et qui est bordée d'une fosse. Une catapulte renvoie sur la plateau les billes qui sont tombées dans la fosse.

Or, il s'est avéré que ce système de catapulte présentait divers inconvénients tels que :

    - le choc des billes sur le plateau et sur les parois de la cheminée, par laquelle elles sont lancées sur la table, rend l'installation bruyante,

    - irrégularités de la force de catapulte, les billes n'étant pas alors catapultées d'une manière uniforme, ce qui pouvait entraîner :

    a) qu'une ou plusieurs billes tombent sur la charge ( cas d'un objet peu épais, tel que tôle) pouvant gêner ultérieurement les opérateurs de manutention.

    b) qu'une ou plusieurs billes viennent heurter la charge (face d'un carton) et que par rebondissement elle(s) soit projetée hors de la table et tombe ainsi à terre. La présence des billes à terre fait courir un danger au personnel.

L'invention pallie ces inconvénients par une installation fonctionnant d'une manière relativement silencieuse, qui ne perd pas de bille et qui est très sûre, parce qu'elle met en oeuvre un guidage positif des billes et non leur catapultage incontrôlé, et rendant ainsi encore plus efficace la possibilité de monter côte à côte plusieurs installations. On peut en outre échanger sans difficulté les billes de l'installation contre des billes de densité différente.

L'invention a pour objet une installation de manutention de charges, comprenant une table sur le plateau horizontal de laquelle roulent librement des billes de même diamètre, une fosse sur le côté de la table et un mécanisme pour retourner sur le plateau les billes qui sont tombées dans la fosse, caractérisée en ce que ce mécanisme est un élévateur qui ne donne aux billes qu'une accélération inférieure à celle de la pesanteur et qui est muni d'un moyen pour déverser les billes sur le plateau lorsqu'il atteint le niveau du plateau.

On comprend que la retombée des billes sur le plateau ne s'effectue plus bruyamment et d'une manière dispersée. L'élévateur monte doucement, comme un ascenseur et, arrivé au niveau du plateau, déverse en douceur et sans vitesse appréciable les billes sur le plateau qui y restent mieux que si elles étaient animées d'une certaine vitesse initiale. Les billes restent au bord du plateau, ce qui n'est que meilleur lors de l'accueil de la charge qui se présente car elle est prise immédiatement en charge par les billes. Comme les billes n'atteignent jamais un niveau supérieur à celui de la charge, il n'y a aucun danger qu'elles reviennent au-dessus de celle-ci.

Suivant une variante particulièrement simple et commode, le moyen pour déverser les billes sur le plateau lorsque l'élévateur atteint le niveau du plateau est constitué par le fait que l'élévateur comprend un porte-billes en une matière déformable élastique et l'un des bords du porte-billes vient buter sous l'un des bords du plateau.

Le déversement s'effectue alors automatiquement par inclinaison de la face supérieure du porte-billes vers le plateau.

Dans l'installation antérieure, décrite au document précédent, une cheminée pour la catapultage des billes est adjacente à la fosse, or, il n'était guère concevable de prendre le risque de confondre la fosse et la cheminée, parce que l'endroit qu'atteindraient 2 billes qui se heurtent, l'une catapultée vers le haut alors que l'autre descend, est imprévisible. Il dépend beaucoup de la vitesse de la bille catapultée au moment du choc. Mais dès l'instant où l'on supprime le catapultage, on peut confondre la cheminée et la fosse. Le porte-billes se déplace dans la fosse. S'il y rencontre une bille descendante, il la ramène vers le haut sur le plateau sans la projeter, d'autant que le porte-billes est déformable et amortit les chocs sans provoquer le rebond de la bille, l'élastique du porte-billes, constitué par exemple en mousse classique de polyuréthanne, étant douce, sans mémoire élastique brusque.

Si l'on veut néammoins éviter tout danger de coincement d'une bille, par exemple entre le porte-billes et le plateau, on peut prendre les mesures suivantes :

1. On prévoit un agencement pour obliger les billes à se présenter en un seul rang sur chaque élévateur. A cet effet, on peut prévoir notamment un brise-vitesse pour les billes disposé en amont de l'endroit où les billes entrent dans l'élévateur.

2. On raidit la face latérale du porte-billes en dessous du bord destiné à coopérer avec celui du plateau. Une bille ne peut plus s'insérer entre le porte-billes et la paroi de la fosse.

3. On ménage sur la face supérieure du porte-billes un sillon, cuvette ou autres moyens de réception des billes, dont la largeur est supérieure de peu au diamètre des billes. Celles-ci s'alignent en une rangée qui ne vient pas sous le bord du plateau, lequel est d'ailleurs en outre avantageusement chanfreiné de manière à s'évaser vers le haut.

4. On prévoit que l'élévateur écarte en mouvement ascendant un volet qui ferme la fosse et qui est dans le prolongement d'un tronc de pyramide disposé sous le plateau et la fosse est plus large au-dessus qu'en dessous du volet. Si une bille tombe dans la fosse peu avant le versement du porte-billes, l'une des billes vient temporairement dans la trappe ménagée par l'évasement de la fosse et, quand le porte-billes redescend, roule sur le volet et rejoint la rampe du répartiteur.

Il est important que l'élévateur soit guidé parfaitement dans son déplacement. A cet effet, suivant un mode de réalisation, l'élévateur coulisse sur des galets dont les axes sont perpendiculaires.

Aux dessins annexés, donnés uniquement à titre d'exemple :

La figure 1 est une vue en coupe d'une installation suivant l'invention:

Les figures 2 à 4 sont des vues de la partie gauche de la figure 1 alors que le porte-billes en mouvement ascendant est aux niveaux respectivement le plus bas, intermédiaire et le plus haut;

La figure 5 illustre le porte-billes en une position intermédiaire, alors qu'il redescend; et

La figure 6 est une vue partielle en perspective de l'élévateur.

L'installation comprend une table dont le plateau 1 horizontal est carré. Les bords 2 du plateau 1 sont biseautés de manière à constituer des faces inclinées du haut vers le bas et de l'extérieur vers l'intérieur.

Sur le plateau 1 roulent librement des billes en acier de même diamètre. Sur les billes 3 roule une charge C à manutentionner.

A une distance du pourtour du plateau 1 supérieure au diamètre des billes 3, sont montées fixes sur un bâti, non représenté, quatre parois 4 dont les chants 5 supérieurs sont à un niveau inférieur au sommet des billes 3. Ces parois forment des fosses 6 avec des parois 7 latérales de la table, solidaires du bâti.

Des parois 7 latérales partent, à un niveau inférieur d'au moins le diamètre des billes 3 à celui du plateau 1, quatre rampes inclinées vers le centre de la table et qui définissent entre elles par leur bord inférieur une ouverture où apparaît le sommet 9 d'un cône 10 répartiteur fixé au bâti. L'axe du cône 10 passe par le point d'intersection des diagonales du plateau 1.

La grande base 11 du cône 10 s'étend jusqu'à quatre fentes 12, de plus grande largeur que le diamètre des billes 3, mais de moindre largeur que le double de ce diamètre, définies par la grande base et par des butées 13 fixées au bâti. A la grande base 11 font suite des épaulements 14 sensiblement verticaux auxquels se raccordent des plans 15 inclinés de plus grande longueur que le diamètre des billes 3. Les bords 16 inférieurs des plans 15 inclinés définissent avec les chants 17 inférieurs des parois 7 ou avec les butées 13 des fentes 18.

Dans les quatres fosses 6 vont et viennent quatre porte-billes 19 d'élévateur. Celui-ci comprend essentiellement quatre leviers 20. Chaque levier 20 pivote autour d'un axe 21 intermédiaire monté sur le bâti. L'une des extrémités 22 de chaque levier 20 est prise dans une chape 23 entraînée, par l'intermédiaire d'une tringle 24, par une plaque 25 solidaire de la tige 26 d'un vérin 27 animée d'un mouvement alternativement ascendant et descendant. Un dispositif 28 par écrou permet de modifier la longueur active de la tringle 24 et donc le pivotement du levier 20 vers le haut, tandis qu'une vis 29 permet de régler la position basse du levier 20.

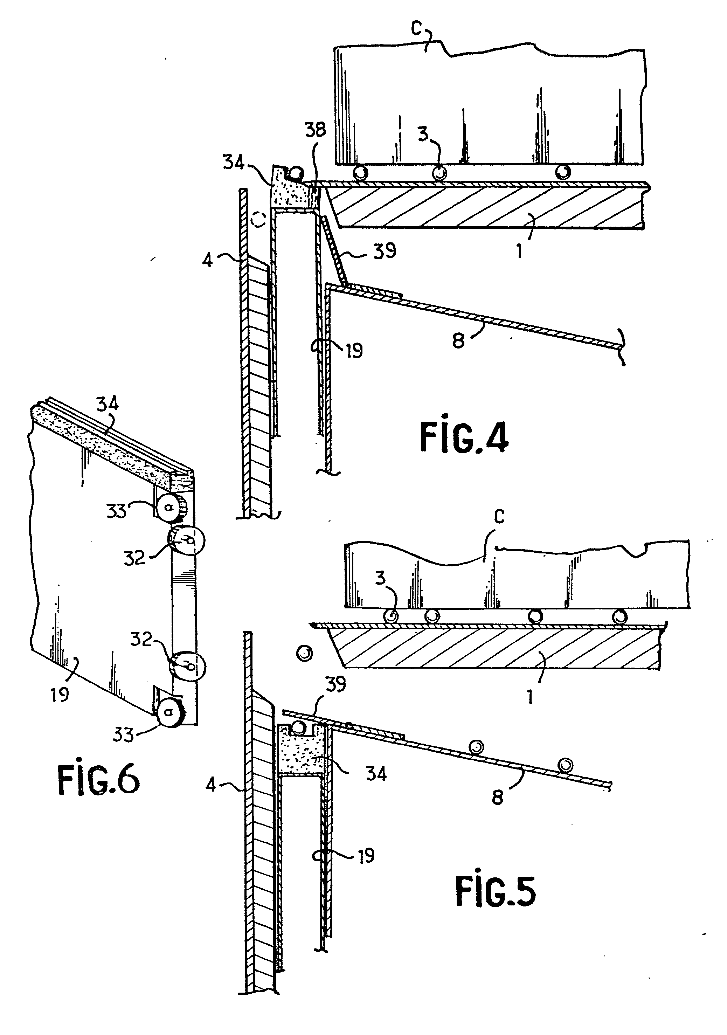

L'autre extrémité 30 de chaque levier 20 attaque le fond 31 du porte-billes 19 qui coulisse dans la fosse 6 en y étant guidé par des galets 32 dont les axes sont horizontaux et parallèles au bord 2 et par des galets 33 dont les axes sont horizontaux et perpendiculaires au bord 2 (figure 6).

Le chant supérieur du porte-billes 19 porte une garniture 34 présente un sillon 35 qui est parallèle au bord 2 et qui est délimité par un rebord 36 extérieur et par un rebord 37 intérieur. La largeur du sillon 35 est au moins égale au diamètre d'une bille 3. Elle est inférieure au double de ce diamètre.

La face 38 latérale du rebord 36 intérieur est raidie à l'extérieur du porte-billes 19 par apport de colle du durcissement.

Le rebord 36 est sur la verticale du bord 2.

Sur chaque rampe 8 inclinée est articulé un volet 39 qui, lorsqu'il vient en contact avec la rampe 8, sous l'action d'un ressort de rappel non représenté, ferme la fosse 6. Au-dessus de ce volet 39, la fosse 6 s'élargit vers l'extérieur en formant une trappe 40.

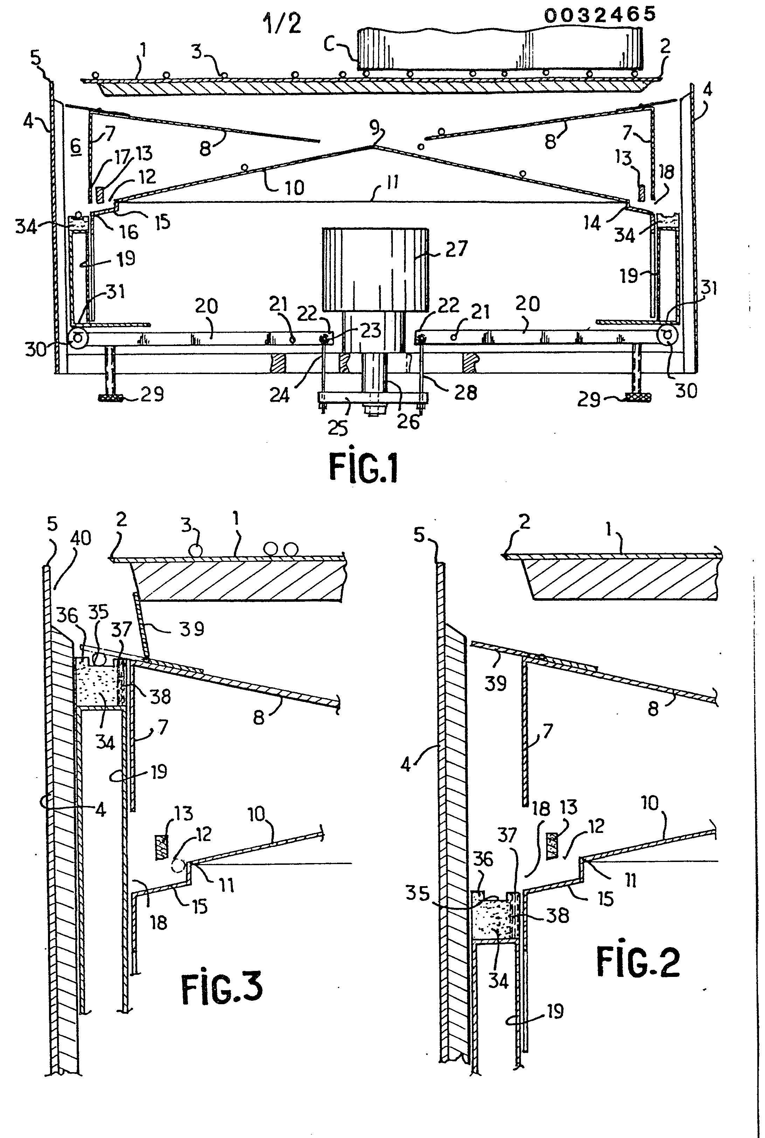

L'approvisionnement de la table en billes s'effectue de la manière suivante : les billes sont réparties par le cône 10. Leur vitesse est brisée par la butée 13 et elles se présentent par rangées devant la fente 18. Chaque rangée, éventuellement incomplète, vient (figure 2) dans le sillon 35, le rebord 37 empêchant que deux rangées de billes se trouvent en même temps sur le porte-billes 19, tandis que le raidissement de la face 38 empêche l'insertion d'une bille entre le porte-billes 19 et le châssis.

Sous l'effet du vérin 26, 27, les leviers 20 élèvent les porte-billes 19. Sur son passage, chacun de ceux-ci repousse le volet 39 (figure 3).

Lorsque le porte-billes 19 arrive au niveau du bord 2, la face supérieure de la garniture 34 portant le sillon 35 s'incline latéralement vers l'intérieur de la table. Les billes (figure 4) roulent doucement sur le plateau 1.

Si juste à cet instant une bille (figure 4) vient tomber dans la fosse 6 ou est entraînée par une charge (sortant du plateau), elle repousse une bille portée par le porte-billes 19 dans la trappe 40.

Lorsque l'élévateur redescend, le volet 39 se rabat (figure 5) et la bille emprisonnée dans la trappe 40 peut rejoindre la rampe 8. Le volet 39 empêche les billes qui tombent ensuite dans la fosse 6 de venir directement sur le porte-billes 19 et de porter ainsi atteinte à la présentation rang par rang des billes sur celui-ci, présentation essentielle au bon fonctionnement de l'installation sans coincement, ni chute de billes hors de l'installation.

Revendications de brevet

1. Installation de manutention de charges, comprenant une table sur le plateau horizontal de laquelle roulent librement des billes de même diamètre, une fosse sur le côté de la table et un mécanisme pour retourner sur le plateau les billes qui sont tombées dans la fosse, caractérisée en ce que ce mécanisme est un élévateur qui ne donne aux billes qu'une accélération inférieure à celle de la pesanteur et qui est muni d'un moyen pour déverser les billes sur le plateau lorsqu'il atteint le niveau du plateau.

2. Installation suivant la revendication 1, caractérisée en ce que ce moyen est constitué par le fait que l'élévateur comprend un porte-billes en une matière déformable élastique et l'un des bords du porte-billes vient buter sous l'un des bords du plateau.

3. Installation suivant l'une des revendications 1 ou 2, caractérisée en ce que l'élévateur se déplace dans la fosse.

4. Installation suivant l'une des revendications 1 à 3, caractérisée par un agencement pour obliger les billes à se présenter en un seul rang sur chaque élévateur.

5. Installation suivant l'une des revendications précédentes, caractérisée par un brise-vitesse pour les billes disposé en amont de l'endroit où les billes entrent dans l'élévateur.

6. Installation suivant l'une des revendications 2 à 5, caractérisée en ce que la face latérale du porte-billes en dessous dudit bord est raidie.

7. Installation suivant l'une des revendications 2 à 6, caractérisée en ce que la face supérieure du porte-billes présente un sillon dont la largeur est supérieure de peu au diamètre des billes.

8. Installation suivant l'une des revendications précédentes, caractérisée en ce que l'élévateur écarte en mouvement ascendant un volet qui ferme la fosse et qui est dans le prolongement d'un
tronc de pyramide disposé sous le plateau.

9. Installation suivant la revendication 8,
caractérisée en ce que la fosse est plus large au-
dessus du volet qu'en dessous de celui-ci.

10. Installation suivant l'une des revendications 1 à 9, caractérisée en ce que l'élévateur
coulisse sur des galets dont les axes sont perpendiculaires.

0032465

**FIG.1**

**FIG.3**

**FIG.2**

FIG.4

FIG.6

FIG.5

Office européen
des brevets

Numéro de la demande

EP 81 40 0003

**RAPPORT DE RECHERCHE EUROPEENNE**

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| | US - A - 2 666 538 (F. DOOLEY) <br> * Colonne 3, lignes 1-38; figures * <br><br> -- | 1,3 | B 65 G  7/04 <br> 35/08 |
| A | FR - A - 1 559 673 (CUVILLIER) <br><br> ---- | 1 | |

**DOMAINES TECHNIQUES RECHERCHES (Int. Cl.³)**

B 65 G
F 16 C
B 23 Q

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 21-04-1981 | VAN ROLLEGHEM |

OEB Form 1503.1  06.78